# EUROPÄISCHE PATENTSCHRIFT

(11) **EP 2 586 730 B1**
(45) Veröffentlichungstag und Bekanntmachung des Hinweises auf die Patenterteilung: **19.02.2014**
(21) Anmeldenummer: 12007261.6
(22) Anmeldetag: 22.10.2012
(51) Int. Cl.: B65G 43/08, B65G 47/31, B65G 47/71

(54) **Linienverteiler**
Line distributor
Distributeur de lignes

(30) Priorität: 27.10.2011 DE 102011117242
(43) Veröffentlichungstag der Anmeldung: 01.05.2013
(73) Patentinhaber: Multivac Sepp Haggenmüller GmbH & Co. KG, 87787 Wolfertschwenden (DE)
(72) Erfinder: Buchenberg, Wolfgang, 87466 Oy-Mittelberg (DE); Taghipour, Alireza, 87439 Kempten (DE); Kult, Alexander, 87435 Kempten (DE); Happach, Bernd, 87544 Blaichach (DE); Gabler, Albert, 87787 Wolfertschwenden (DE)
(74) Vertreter: Grünecker, Kinkeldey, Stockmair & Schwanhäusser

(56) Entgegenhaltungen:
- EP-A1- 2 361 858
- EP-A2- 0 480 436
- WO-A1-2010/078664
- DE-A1- 2 531 967
- DE-A1- 2 544 499
- FR-A1- 2 433 375

## Beschreibung

Die Erfindung bezieht sich auf einen Linienverteiler zum Verteilen von Schalen gemäß Anspruch 1 und ein Verfahren zum automatischen Initialisieren eines Linienverteilers gemäß Anspruch 11.

Von der EP 0 480 436 A2 ist eine Verteil- und Sammelvorrichtung bekannt zum Verteilen und Sammeln von Produkten, die einzeln nacheinander zugeführt werden, auf eine vorbestimmte Anzahl von Reihen in Sätzen mit einer festen Anzahl. Die EP 2 361 858 A1 offenbart eine mehrspurige Flaschengruppiervorrichtung mit mehreren Antriebseinheiten mit unterschiedlichen Transportgeschwindigkeiten.

Von der US 2006/0070927 A1 ist ein Linienverteiler zum Aufteilen eines Stroms von Fördergütern auf eine Mehrzahl von Spuren bekannt. Er umfasst mehrere aufeinanderfolgende Transporteinheiten und Sensoren, um die Verteilung der Fördergüter auf den Spuren zu kontrollieren.

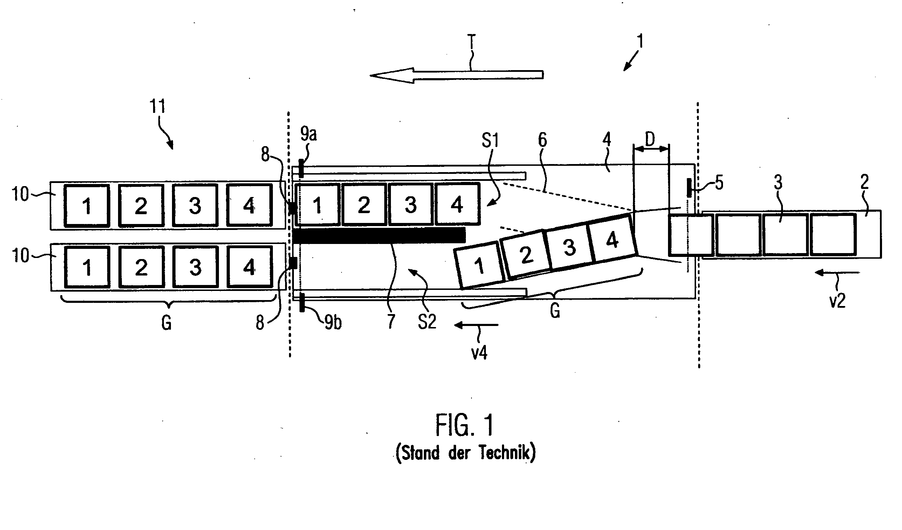

Es sind ferner Linienverteiler aus der Praxis bekannt, um Schalen, die mittels eines einspurigen Zuführsystems vom Linienverteiler aufgenommen werden, auf zwei Spuren aufzuteilen. Am Ende des Linienverteilers ist für jede Spur ein Stopperelement vorgesehen, um die erste Reihe mit zwei Schalen an eine nachfolgende zweispurige Schalenverschließmaschine weiterzugeben. Ein solcher herkömmlicher Linienverteiler ist in Fig. 1 gezeigt.

Der Linienverteiler weist dabei ein einziges Transportband auf. Am Anfang des Linienverteilers ist eine Lichtschranke vorgesehen, um die Schalen, die vom Zuführsystem übernommen werden, zu zählen und der Steuerung des Linienverteilers mitzuteilen. Anschließend bewegen sich die Schalen entlang einer Verteileinrichtung, um einer vorgesehenen Spur zugeordnet zu werden. Eine weitere Lichtschranke ist direkt nach der Verteileinrichtung angebracht, um das hintere Ende einer Schale zu erfassen. Die Steuerung stellt die Verteileinrichtung derart ein, dass alle für ein Format auf einer Spur benötigten Schalen nacheinander je Spur verteilt werden, d. h. die ersten Schalen werden als eine erste Gruppe auf die erste Spur verteilt und danach die weiteren Schalen wieder als eine Gruppe auf die zweite Spur. Um einen für die Umstellung der Verteileinrichtung benötigten Abstand zwischen der letzten Schale einer ersten Gruppe und der ersten Schale einer folgenden Gruppe zu erzeugen, wird die Bandgeschwindigkeit kurzzeitig dann erhöht, sobald die erste Lichtschranke das hintere Ende der letzten Schale einer Gruppe zu Beginn des Linienverteilers erfasst hat.

Beim Neustart dürfen sich keine Schalen auf dem gesamten Linienverteiler befinden, da die Steuerung nicht feststellen kann, ob Schalen während des Stillstands vom Linienverteiler entnommen oder zusätzlich auf freie Bandflächen aufgelegt wurden. Dabei steht dem Maschinenbediener oft keine Ablagemöglichkeit für die entnommenen Schalen zur

Verfügung, entsprechend umständlich ist das Abräumen. Die Initialisierung des Linienverteilers erfolgt hierbei immer unter der Annahme "keine Schalen innerhalb des Linienverteilers". Eine von der vorgesehenen Anzahl einer Gruppe von Schalen abweichende Anzahl führt in der nachfolgenden Schalenverschließmaschine zu Problemen und Maschinenstillständen. Während des Produktionsprozesses kann es zudem vorkommen, dass Schalen zur Qualitätsprüfung vom Linienverteiler entnommen werden, was auch zu Problemen in der Schalenverschließmaschine führt.

Aufgabe der vorliegenden Erfindung ist es, einen Linienverteiler zur Verfügung zu stellen, um die Leistung zu steigern und derart zu verbessern, dass ein Freiräumen von Schalen auf einem Linienverteiler vor dem Start entfallen kann.

Diese Aufgabe wird gelöst durch einen Linienverteiler mit den Merkmalen des Anspruchs 1 und ein Verfahren gemäß Anspruch 11. Vorteilhafte Weiterbildungen sind in den Unteransprüchen angegeben.

Der erfindungsgemäße Linienverteiler zum Aufteilen eines einspurigen Stroms von Schalen auf zwei oder mehr Spuren umfasst vier in einer Transportrichtung aufeinander folgende ("erste bis vierte") Transporteinheiten mit jeweils einem Antrieb, ferner einen Verteilersensor und zwei Spursensoren, eine Verteilereinheit, zwei Freigabestopper und zwei Vorstopper. Die Freigabestopper sind dazu ausgebildet, eine erste Reihe von Schalen (d. h. die jeweils vordersten Schalen jeder der beiden Spuren) gleichzeitig zum Weitertransport an eine nachfolgende Produktionseinheit, vorzugsweise eine Schalenverschließmaschine, freizugeben. Es ist jeweils ein Spursensor zwischen dem Freigabestopper und dem Vorstopper einer Spur vorgesehen, um für jede Spur die Anwesenheit einer Schale zwischen dem Freigabestopper und dem Vorstopper und/oder das hintere Ende der Schale zu erfassen. Dies stellt für die nachfolgende Produktionseinheit sicher, dass immer eine Schale pro Spur vom Linienverteiler weitergegeben wird und dadurch leere Positionen beispielsweise in einer Siegelstation verhindert werden und dadurch Produktionsstillstände entfallen. Durch die Anordnung von vier Transporteinheiten, vorzugsweise als Transportbänder ausgeführt, mit vier eigenen Antrieben, können die Abstände zwischen den Schalen bei Bandübergängen so geändert werden, dass die Anzahl der zu verteilenden und transportierenden Schalen auf ein Maximum gesteigert werden kann.

Bevorzugt sind die Spursensoren und/oder der Verteilersensor optische Sensoren, vorzugsweise aus Kostengründen und für eine hohe Betriebssicherheit Lichtschranken.

Besonders günstig ist es, wenn die Freigabestopper einen gemeinsamen Aktor aufweisen, beispielsweise einen Pneumatikzylinder, so dass sich beide Stopper schnell und zuverlässig zeitgleich deaktivieren lassen, um eine Reihe von Schalen, bzw. zwei auf zwei Spuren nebeneinander befindliche Schalen, an nachfolgende Transportbänder zu übergeben. Als "aktiv" oder als "aktiviert" werden die Stopper hier bezeichnet, solange sie sich in einer Position befinden, in der sie Schalen stoppen (können).

In einer besonders vorteilhaften Ausführungsform weist der Linienverteiler eine Streckensteuerung auf, die dazu ausgebildet ist, die aktuellen Positionen von den Schalen entlang der Transportstrecke in einer Steuerung zu verwalten. Somit ist dem Linienverteiler zu jeder Zeit bekannt, wo sich Schalen auf den Transportbändern des Linienverteilers befinden und die Steuerung kann die Verteilereinheit entsprechend und flexibel ansteuern, um die maximale Leistung zu erzielen.

Um eine optimale Anbindung bzw. Integration mit der nachfolgenden Produktionseinheit zu gewährleisten, ist die Steuerung bevorzugt die Maschinensteuerung der Produktionseinheit. Dabei können auch die Kosten gegenüber zwei einzelnen Steuerungen mit je einem Bedienterminal, die miteinander kommunizieren, minimiert werden und gleichzeitig die Prozesssicherheit erhöht und Intervalle zur Übertragung von Signalen verkürzt werden.

Erfindungsgemäß ist die vierte Transporteinheit in ihrer Förderrichtung reversibel, um nach einem Stillstand des Transportbands das Vorhandensein einer Schale mit nur einem Spursensor prüfen zu können, da die Schalen unterschiedliche Längen aufweisen können und somit nicht automatisch von dem Spursensor bei stillstehendem Transportband erfasst werden.

Bevorzugt ist die Geschwindigkeit der vierten Transporteinheit gegenüber der Geschwindigkeit einer direkt stromaufwärts angeordneten dritten Transporteinheit höher, um einen erforderlichen Abstand zwischen zwei aufeinanderfolgenden Schalen zu erzeugen. Damit wird sichergestellt, dass beim Aktivieren eines Vorstoppers dieser nicht mit einer Schale in Kontakt kommt, ehe er seine Endstellung erreicht hat. Ein solcher Kontakt könnte zu einer Beschädigung der Schale oder zu einem teilweisen Produktverlust aus der Schale führen.

Vorzugsweise ist die Geschwindigkeit der zweiten Transporteinheit gegenüber der Geschwindigkeit einer direkt stromaufwärts angeordneten ersten Transporteinheit höher, um einen erforderlichen Abstand zwischen zwei aufeinanderfolgenden Schalen zu erzeugen. Dies ermöglicht einen Abstand zwischen allen Schalen, die sich im Bereich der Verteilereinheit befinden. Über die Steuerung ist der Linienverteiler in der Lage, flexibel und leistungsoptimiert die Schalen zu verteilen, und er ist nicht von vorbestimmten Gruppen abhängig.

In einer besonders vorteilhaften Ausführung weist der Abstand von dem Vorstopper entgegen der Transportrichtung bis zum Beginn der vierten Transporteinheit eine Länge auf, die der Länge einer Schale zuzüglich einer Toleranz von 20% entspricht. Zum Einen stellt dies sicher, dass bei unterschiedlichen Bandgeschwindigkeiten ein Abstand zwischen zwei aufeinanderfolgenden Schalen vor dem Vorstopper erzeugt werden kann, zum Anderen dient dieser Bereich als Puffer für jede Spur.

Als besonders günstig hat es sich gezeigt, wenn zwischen den Vorstoppern und dem Verteilersensor die Anzahl einer Gruppe von Schalen einer Spur eines Formates der nachfolgenden Produktionseinheit auf jeder Spur aufnehmbar ist. Dadurch wird eine optimierte Pufferstrecke bereitgestellt und die Gesamtlänge des Linienverteiler nicht unnötig groß.

Bevorzugt weist die erste Transporteinheit eine gegenüber der zweiten Transporteinheit höhere Friktion an der mit einem Boden der Schalen zusammenwirkenden Oberfläche auf. Dies ermöglicht zum Einen dem Linienverteiler bei stillstehender erster Transporteinheit die Schalen, die von einem Zuführförderer übernommen werden sollen, anzuhalten, auch wenn der Zuführförderer weiterläuft. Zum Anderen weist die Schale durch die hohe Friktion des Schalenbodens auf der ersten Transporteinheit diese Geschwindigkeit auf und durch die Geschwindigkeitsdifferenz der nachfolgenden zweiten Transporteinheit ist die Erzeugung eines gewünschten Abstand zwischen zwei aufeinanderfolgenden Schalen für die Verteilereinheit prozesssicher erzeugbar.

Das erfindungsgemäße Verfahren zum automatischen Initialisieren eines Linienverteilers der oben beschriebenen Art, bei dem eine Streckensteuerung vorgesehen ist, um die aktuelle Positionen von den Schalen entlang der Transportstrecke zwischen dem Verteilersensor und dem Freigabestopper zu verwalten, sieht folgende Schritte vor:
Ermitteln auf Vorhandensein einer Schale auf jeder Spur vor dem Freigabestopper mittels des Spursensors,
   a) falls wenigstens auf einer Spur keine Schale ermittelt worden ist: Deaktivieren des Vorstoppers der Spur, die keine Schale aufweist, und Bewegen der dritten und vierten Transporteinheit, um Schalen vor die Freigabestopper zu transportieren,
   b) falls auf beiden Spuren eine Schale ermittelt worden ist: Bewegen der dritten und vierten Transporteinheit und Deaktivieren der Freigabestopper und der Vorstopper, um die erste Reihe von Schalen an die Produktionseinheit zu übergeben, danach Freigabestopper aktivieren.

Dabei kann der Bediener die Schalen auf den Transporteinheiten belassen und auch Schalen entnehmen, ohne dass es beim nächsten Start des Linienverteilers zu Fehlern bei der Übergabe von Schalen an die Produktionseinheit kommt.

Erfindungsgemäß wird das Vorhandensein einer Schale auf jeder Spur vor dem Freigabestopper mittels des Spursensors derart ermittelt, dass die vierte Transporteinheit entgegen der normalen Transportrichtung zurückbewegt wird, um eine Schale, die an dem Freigabestopper anstehen kann, von dem Spursensor zu erfassen, um das Vorhandensein einer Schale zwischen dem Freigabestopper und dem Vorstopper zu ermitteln.

Als besonders zweckmäßig hat es sich herausgestellt, dass nach einem Start folgende Schritte vorgesehen sind:
Starten der dritten und vierten Transporteinheit und Freigeben von Reihen von Schalen vor den Freigabestoppern, bis bei einer oder beiden Spuren keine Schale mehr bis zum Freigabestopper zugeführt werden kann,
Rücksetzen der Streckensteuerung für die leere Spur (d. h. "Reset" der Streckensteuerung mit der Information, dass die betreffende Spur auf der dritten und vierten Transporteinheit keine Schalen enthält), Linienverteiler auf eine zurückgesetzte Spur stellen.

Somit kann unabhängig von den auf der dritten und vierten Transporteinheit noch befindlichen Schalen eine automatische Rücksetzung der Streckensteuerung ohne Zutun des Bedieners erfolgen.

Das automatische Initialisieren des Linienverteilers ist gleichbedeutend damit, dass jede einzelne Spur des Linienverteilers gleichzeitig oder nacheinander "zurückgesetzt" wird oder wurde in dem Sinne, dass die Streckensteuerung vermerkt, dass die betreffenden Spuren zu einem bestimmten Zeitpunkt keine Schalen mehr enthalten. Von diesem Zeitpunkt an verfügt die Streckensteuerung unter Berücksichtigung der Daten von dem Verteilersensor und des Betriebs der Transportbänder und/oder der Spurensensoren wieder über sämtliche Informationen darüber, welche Schalen sich an welchen Positionen entlang des Linienverteilers hinter dem Verteilersensor befinden.

Des Weiteren hat es sich als besonders vorteilhaft herausgestellt, dass bei der Initialisierung von nur einer Spur die erste Transporteinheit bewegt wird, um der initialisierten Spur maximal die Anzahl von Schalen für eine Spur einer Gruppe bereit zu stellen, bis bei der noch nicht initialisierten zweiten Spur keine Schale mehr zum Freigabestopper zugeführt werden kann.

Bevorzugt werden nach einer Initialisierung bei laufendem Betrieb entsprechend der Belegung der Spuren, die über die Streckensteuerung ermittelt wird, die Schalen mittels der Verteilereinheit auf beide Spuren verteilt, vorzugsweise abwechselnd wenigstens zwei Schalen pro Spur und weniger als die pro Spur einer Gruppe vorgesehene Anzahl.

Im Folgenden werden vorteilhafte Ausführungsbeispiele der Erfindung anhand einer Zeichnung näher erläutert. Im Einzelnen zeigen:
Figur 1: eine schematische Draufsicht eines Linienverteilers nach dem Stand der Technik,
Figur 2: eine schematische Ansicht eines erfindungsgemäßen Linienverteilers,
Figur 3: eine schematische Draufsicht des in Figur 2 dargestellten Linienverteilers bei laufendem Betrieb in einer ersten Phase,
Figur 4: eine schematische Draufsicht des in Figur 2 dargestellten Linienverteilers bei laufendem Betrieb in einer zweiten Phase,
Figur 5: eine schematische Draufsicht des in Figur 4 dargestellten Linienverteilers zu Beginn einer Initialisierungsphase,
Figur 6: eine schematische Draufsicht des in Figur 5 dargestellten Linienverteilers im weiteren Verlauf der Initialisierungsphase,
Figur 7: eine schematische Draufsicht des in Figur 6 dargestellten Linienverteilers im weiteren Verlauf der Initialisierungsphase,
Figur 8: eine schematische Draufsicht des in Figur 7 dargestellten Linienverteilers im weiteren Verlauf der Initialisierungsphase,
Figur 9: eine schematische Draufsicht des in Figur 9 dargestellten Linienverteilers am Ende der Initialisierungsphase.

Gleiche Komponenten sind in den Figuren durchgängig mit gleichen Bezugszeichen versehen worden.

Figur 1 zeigt in schematischer Draufsicht einen Linienverteiler 1 nach dem Stand der Technik. Der Linienverteiler 1 erhält von einem einspurigen Zuführförderer 2, der in Produktionsrichtung T stromaufwärts angeordnet ist, mit Produkt gefüllte Schalen 3. Die Schalen 3 werden auf das Transportband 4 des Linienverteilers 1 übernommen. Dabei wird jede Schale 3 von einer am vorderen Ende des Transportbands 4 angebrachten Lichtschranke 5 erfasst. Eine nicht dargestellte Steuerung, die den Antrieb des Transportbands 4 regelt, sorgt dafür, dass nach dem Erfassen einer Anzahl von Schalen, die für eine Gruppe G von Schalen 3 im nachfolgenden Produktionsprozess benötigt wird, die Geschwindigkeit v4 des Transportbands 4 des Linienverteilers 1 soweit gegenüber der Geschwindigkeit v2 des Zuführförderers 2 erhöht wird, dass zwischen der letzten Schale (Nr. 4) einer Gruppe G und der ersten Schale (Nr. 1) der nächsten vom Zuführförderer aufzunehmenden Schale 3 ein Abstand D erzeugt wird. Damit kann eine Schwenkeinrichtung 6 nach einer Gruppe G und vor der nachfolgenden Gruppe G von einer Spur S1 auf eine weitere Spur S2 bei laufendem Transportband 4 schwenken, ohne dass es zu einer Kollision der ersten Schale (Nr.1) mit einer mittleren Führungsanlage 7 kommt.

In Produktionsrichtung T am Ende des Linienverteilers 1 sind für beide Spuren S1 und S2 Stopper 8 angebracht, um die Gruppen G von Schalen 3 bis zu einer Freigabe von der Produktionseinheit 11 bei laufendem Transportband 4 anzuhalten. Die Anwesenheit einer Gruppe G bzw. einer ersten Schale (Nr.1) vor dem Stopper 8 wird mittels Lichtschranken 9a, 9b je Spur S1, S2 erfasst. Sind auch die nachfolgenden Transportbänder 10 der nachfolgenden Produktionseinheit 11 zur Aufnahme einer neuen Gruppe G von Schalen 3 bereit und wird auf beiden Spuren S1, S2 eine vollzählige Gruppe G vor den Stoppern 8 erkannt, so werden die Stopper 8 deaktiviert bzw. entfernt und die gesamten Gruppen G gleichzeitig übergeben. Nach einer definierten Zeit, die von der Geschwindigkeit V4 des Transportbands 4 abhängt, werden die Stopper 8 wieder für die nachkommenden Gruppen G von Schalen 3 aktiviert.

Sollte es zu einem Anhalten des Linienverteilers 1 kommen, ist durch den Bediener dafür zu sorgen, dass alle sich auf dem Transportband 4 befindlichen Schalen 3 entfernt werden, da die Steuerung des herkömmlichen Linienverteilers 1 nicht erkennen kann, ob und wo sich bereits Schalen 3 auf dem Transportband 4 vor dem nächsten Start befinden. Daher beginnt die Steuerung nach einem folgenden Wiederstart mit dem Zählen von Schalen 3 am Beginn des Transportbands 4 mittels der Lichtschranke 5 und bildet Gruppen G abwechselnd für jede Spur S1, S2.

Falls während der Produktion eine oder mehrere Schalen 3 von dem Transportband 4 aufgrund eines Fehlers oder zu Zwecken der Qualitätssicherung heruntergenommen werden, so wird dies nicht erkannt und es wird eine unvollständige Gruppe G an die nachfolgende Produktionseinheit 11 übergeben. Ist diese Produktionseinheit 11 beispielsweise eine Schalenversiegelungsmaschine, so kann es in deren Siegelstation durch eine oder mehrere fehlende Schalen 3 zu Maschinenstillständen kommen. Bei dem anschließend auftretenden Stopp der Schalenverschließmaschine und damit auch des Linienverteilers 1 muss dieser von allen Schalen 3 wieder freigeräumt werden.

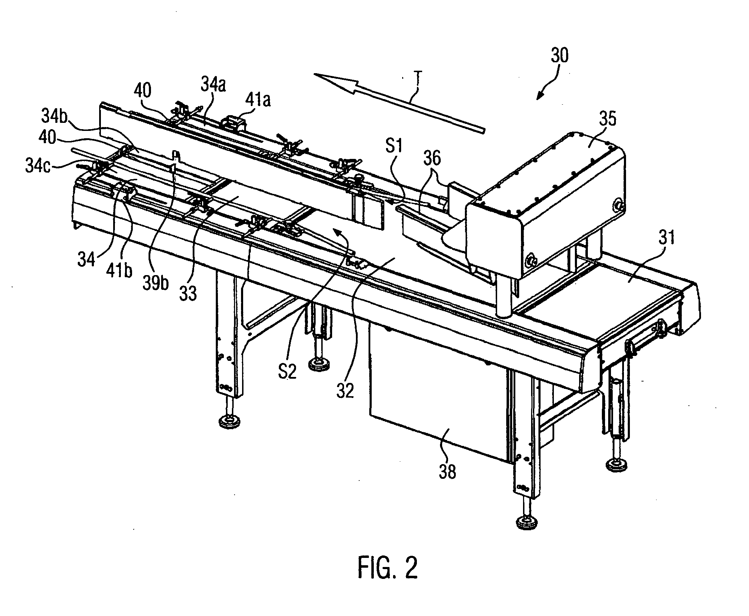

Figur 2 zeigt einen erfindungsgemäßen Linienverteiler 30 mit vier als Transportbändern ausgebildeten Transporteinheiten 31, 32, 33, 34, die aufeinanderfolgend in Transportrichtung T angeordnet sind. Die Transportbänder 31, 32, 33, 34 haben jeweils einen eigenen (nicht dargestellten) Antrieb, vorzugsweise einen Servomotor. Über dem zweiten Transportband 32 ist eine Verteilereinheit 35 angebracht, um Schalen 3, mit einer Länge L, auf die Spuren S1 und S2 zu verteilen.

Die Geschwindigkeit v32 des zweiten Transportbands 32 ist soweit gegenüber der Geschwindigkeit v31 des ersten Transportbands 31 erhöht, dass nach dem Übergang der Schalen vom ersten Transportband 31 zum zweiten Transportband 32 ein Abstand D erzeugt wird, der notwendig ist, um zwischen Schalen 3 die Verteilereinheit 35 von einer Spur S1, S2 auf die andere Spur S1, S2 durch eine Schwenkbewegung von zwei parallelen Führungsanlagen 36 der Verteilereinheit 35 umzulenken und zu verteilen. Ein Verteilersensor 37, hier als Lichtschranke ausgeführt, erkennt die Schale 3 und gibt diese Information an eine Steuerung 38 weiter. Die Steuerung 38 kann eine eigene Steuerung des Linienverteilers 30 sein oder aber auch die Maschinensteuerung einer nachfolgenden Produktionseinheit, z.B. einer Verpackungsmaschine, vorzugsweise einer Schalenverschließmaschine. Die Lichtschranke 37 stellt sicher, dass ein Schwenkvorgang der Führungsanlagen 36 der Verteilereinheit 35 nur dann erfolgt, wenn sich keine Schale 3 im Erfassungsbereich der Lichtschranke 37 befindet. Dabei kann die Lichtschranke 37 ein Ende der Schale 3 erkennen und dieses Signal als Freigabesignal für die Schwenkbewegung an die Steuerung 38 übermitteln.

Das dritte Transportband 33 dient als Pufferband und wird mit einer gegenüber dem zweiten, davor angeordneten Transportband 32 geringeren Geschwindigkeit v33 angetrieben. An dem vierten und letzten Transportband 34, das hier mittels drei parallel zueinander laufenden und gemeinsam angetriebenen Transportbändern 34a, 34b und 34c ausgeführt ist, sind zwei Vorstopper 39a, 39b für beide Spuren S1, S2 und zwei Freigabestopper 40 vorgesehen. Die Vorstopper 39a und 39b können getrennt betätigt werden, die Freigabestopper 40 weisen vorzugsweise einen gemeinsamen Aktor, oder zwei synchron aktivierbare Aktoren auf, um gleichzeitig jeweils eine Schale 3 pro Spur S1, S2 an die nachfolgende Produktionseinheit 11 zu übergeben.

Es sind Lichtschranken 41 a, 41 b zwischen dem Vorstopper 39a, 39b und dem Freigabestopper 40 für jeweils eine Spur S1, S2 vorgesehen, um die Anwesenheit einer Schale 3 für eine Übergabe an das nachfolgende Transportband 10 zu erkennen, und das hintere Ende der Schale 3 zu erkennen, um den Vorstopper 39a, 39b zwischen zwei aufeinanderfolgenden Schalen 3 zu aktivieren, so dass die Schale 3 nicht durch einen Vorstopper 39a, 39b angehoben wird. Dies würde sonst dazu führen, dass das Produkt zumindest teilweise aus der Schale 3 gelangt. Dies könnte zu einer Verschmutzung der Transportbänder führen und die Schale selbst müsste aussortiert werden.

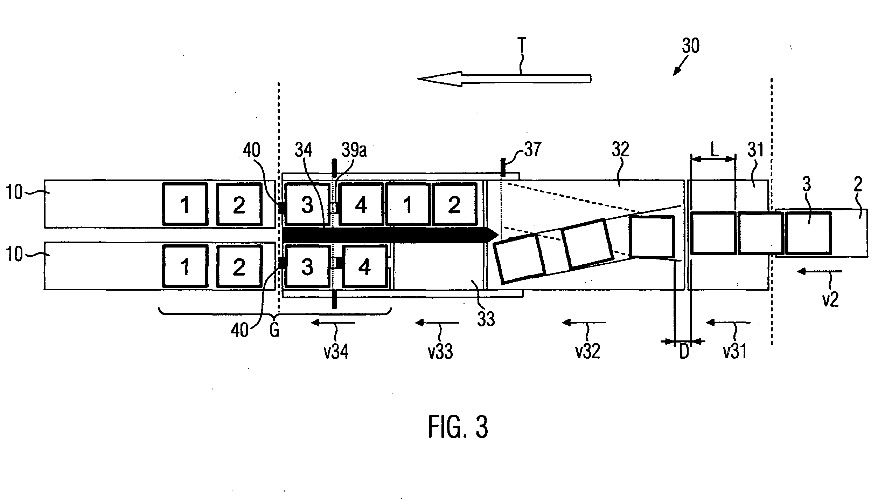

Anhand der Figuren 3 bis 9 wird der Ablauf während eines laufenden Betriebes und einer Initialisierungsphase ausführlich erläutert. Figur 3 zeigt auf der rechten Seite einen einspurigen Zuführförderer 2 und auf der linken Seite zwei Transportbänder 10 einer Produktionseinrichtung 11. Damit die Produktionseinrichtung 11 einwandfrei arbeiten kann, müssen in diesem Ausführungsbeispiel auf die Transportbänder 10 jeweils eine Gruppe G von je vier Schalen übergeben werden. Da die Transportbänder 10 einen gemeinsamen Antrieb aufweisen können, müssen die Schalen 3 beider Gruppen G in Transportrichtung T exakt parallel zueinander angeordnet sein. Dies hat zur Folge, dass die Schalen 3 synchron bzw. zeitgleich von dem Linienverteiler 30 zweispurig auf die Transportbänder 10 übergeben werden müssen. Die Gruppe G ist nicht auf vier Schalen 3 beschränkt, sondern lässt auch jede andere Anzahl von Schalen 3 zu.

Der Zuführförderer 2 stellt bei einer laufenden Transportbandgeschwindigkeit v2 Schalen 3, die üblicherweise aneinander gereiht sind, zur Verfügung. Dabei weist der Zuführförderer 2 eine Oberfläche mit einer geringen Friktion auf. Das erste Transportband 31 des Linienverteilers 30 weist eine gegenüber dem Zuführförderer 2 höhere Friktion auf. Zum Einen kann dadurch der Strom von Schalen 3 seitens des Zuführförderers 2 bei einem stillstehenden Transportband 31 aufgehalten werden. Zum Anderen ist eine hohe Friktion nötig, um beim Übergang der Schalen 3 von dem mit der Geschwindigkeit v1 laufenden Transportband 31 auf das mit der Geschwindigkeit v2 laufende Transportband 32 einen bestimmten Abstand D zwischen zwei aufeinanderfolgenden Schalen 3 zu erzeugen. Eine niedrige Friktion auf dem ersten Transportband 31 könnte eine Bewegung der Schalen 3 zur Folge haben, die ungleich der Geschwindigkeit v1 des laufenden Transportband 31 ist, und somit wäre mittels der Steuerung 18 die Geschwindigkeitsregelung des zweiten Transportbandes 32 für die Erzeugung des Abstandes D zweier aufeinanderfolgender Schalen 3 nicht gewährleistet.

Im laufenden Betrieb bewegen sich alle Transportbänder 31, 32, 33, 34. Über die Verteilereinheit 35 werden die Schalen 3 derart verteilt, dass abwechselnd jeweils zwei Schalen 3 auf die Spuren S1, S2 verteilt werden. Die Lichtschranke 37 erfasst die Schalen 3 und über die Stellung der Führungsanlagen 36 wird jede Schale 3 in der Streckensteuerung aufgenommen und somit die aktuelle Position der Schalen 3 entlang des weiteren Transports über das dritte und vierte Transportband 33, 34 weiterverfolgt. Unter Einsatz einer solchen Streckensteuerung zwischen der Lichtschranke 37 und den Freigabestoppern 40 ist die Steuerung 38 in der Lage, die Verteilereinheit 35 so zu steuern, dass eine gleichmäßige bzw. optimale Verteilung der Schalen 3 auf die Spuren S1, S2 erfolgen kann und somit die Leistung gegenüber dem Stand der Technik erhöht werden kann. Dabei wird als Leistung die Möglichkeit definiert, in einer möglichst kurzen Zeit möglichst viele Schalen 3 von einem einspurigen Zuführförderer 2 auf zwei Transportbänder 10 aufzuteilen und zu übergeben.

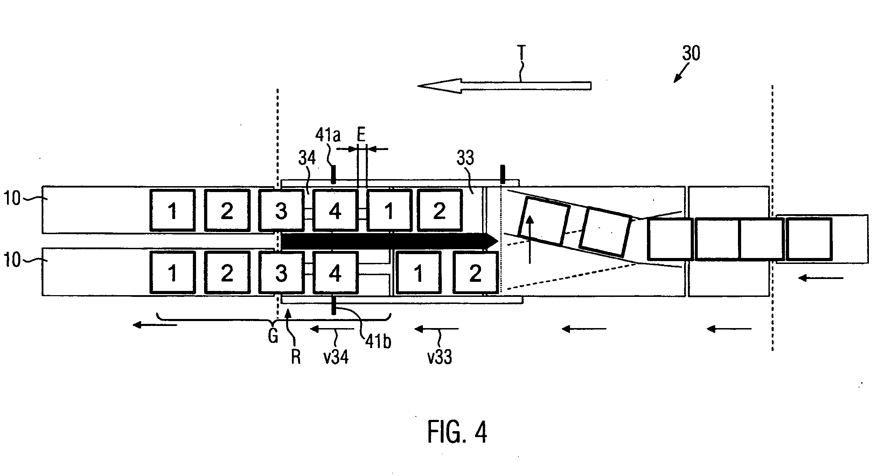

Die Ziffern (Nr.) "1" bis "4" auf den Schalen 3 stellen jeweils eine Gruppe G dar. Die Vorstopper 39a, 39b halten die vor dem Freigabestopper 40 befindliche Schale (Figur 3 Nr. 3) von nachfolgenden Schalen frei, so dass keine unterschiedlichen Schiebekräfte durch eine unterschiedliche Anzahl von Schalen 3 auf die Schale (Figur 3 Nr. 3) wirken. Dies gewährleistet, dass beim Deaktivieren der Freigabestopper 40 beide vordersten Schalen (Figur 3 Nr. 3) synchron als eine Reihe R vom vierten Transportband 34 auf die Transportbänder 10 übergeben werden, wie in Figur 4 gezeigt. Die Vorstopper 39a, 39b können auch gleichzeitig mit den Freigabestoppern 40 deaktiviert werden, um eine neue Schale (Figur 4 Nr. 4) in die Übergabeposition direkt vor den Freigabestoppern 40 bereitzustellen. Dabei erkennt die Lichtschranke 41a, 41b das hintere Ende der Schale 3. Da die Geschwindigkeit v4 des vierten Transportbands 34 höher ist als die Geschwindigkeit v3 des dritten Transportbands 33, wird ein Abstand E zwischen zwei Schalen 3 erzeugt, der notwendig ist, damit die Vorstopper 39a, 39b zwischen zwei Schalen 3 ohne mit diesen zu kollidieren aktiviert werden können.

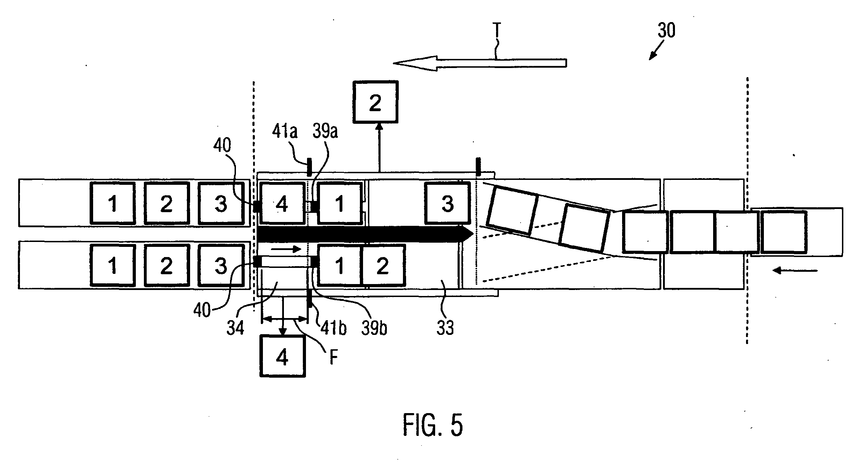

Figur 5 zeigt die Situation nach einem Stop der Produktionsanlage, bei der auch der Linienverteiler 30 und damit alle Transportbänder 31, 32, 33, 34 angehalten wurden. Während des Stillstands kann es vorkommen, dass einzelne Schalen 3 beispielsweise zu Prüfzwecken entnommen werden oder einige Schalen 3 als fehlerhaft aussortiert werden. In diesem Beispiel wurde die Schale Nr. 2 auf der oberen Spur S1 und die Schale Nr. 4 auf der unteren Spur S2 entnommen. Damit der Bediener im Unterschied zum Stand der Technik nicht alle auf dem Linienverteiler 30 befindlichen Schalen 3 entfernen muss, ist erfindungsgemäß eine automatische Initialisierung vorgesehen, die es ermöglicht, ohne Mitwirkung des Bedieners die Spuren S1 und S2 automatisch zu initialisieren, damit die Streckensteuerung 38 wieder in die Lage versetzt wird, alle Schalen 3 beider Spuren S1, S2 zu kennen und die Geschwindigkeiten v1, v2, v3, v4 der Transportbänder 31, 32, 33, 34 und die Verteilereinheit 35 optimal zu steuern, um eine maximale Leistung zu erreichen.

Die Initialisierung läuft wie folgt ab. Wie in Figur 5 mit einem Pfeil nach rechts auf dem vierten Transportband 34 angedeutet, wird nur das vierte Transportband 34 gegen die Transportrichtung T bewegt, maximal um den Abstand F zwischen dem Freigabestopper 40 und dem Vorstopper 39a, 39b, um zu ermitteln, auf welcher Spur S1, S2 bereits eine Schale 3 vorhanden ist. Die anderen Transportbänder 31, 32, 33 stehen noch still und die Vorstopper 39a, 39b sind dabei aktiviert.

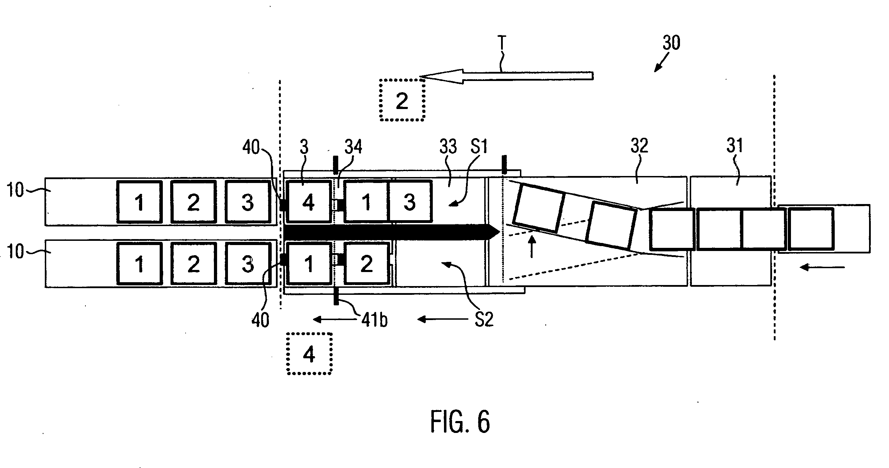

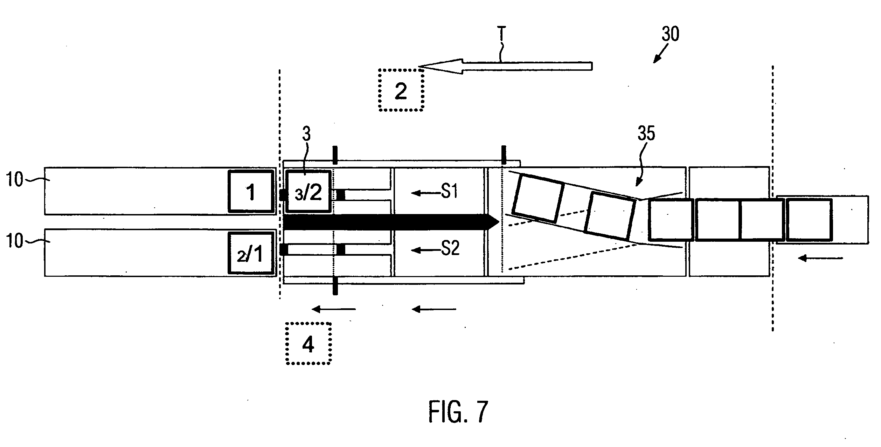

Anschließend, wie in Figur 6 gezeigt, werden das dritte und vierte Transportband 33, 34 in Transportrichtung T bewegt und der Vorstopper 39b, auf dessen Spur S2 keine Schale 3 von der Lichtschranke 40b erfasst wurde, deaktiviert. Dadurch kann eine nächste Schale 3, sofern vorhanden, vor den Freigabestopper 40 transportiert werden. Der Vorstopper 39b wird vor der nachfolgenden Schale (in Figur 6 Nr. 2) wieder aktiviert. Die Schalen 3 werden weiter an die Transportbänder 10 übergeben, bis mittels einer Lichtschranke 41b von der Steuerung 38 erkannt wird, dass sich keine Schalen 3 auf der Spur S2 befinden (siehe Figur 7). Zwischenzeitlich wurden die auf den Transportbändern 10 komplettierten Gruppen G innerhalb der Produktionseinheit 11 weitertransportiert und weitere Schalen 3 können vom Linienverteiler 30 auf die Transportbänder 10 übernommen werden.

Nun kann diese Spur S2 derart "zurückgesetzt" werden, dass die Streckensteuerung vermerkt, dass die Spur S2 keine Schalen aufweist. Falls auf beiden Spuren S1, S2 keine Schalen 3 mehr vorhanden sind, können bereits beide Spuren S1, S2 bzw. die Streckensteuerung für beide Spuren S1, S2 zurückgesetzt werden. Die Verteilereinheit 35 stellt sich anschließend entsprechend auf die Spur S2 ein, die keine Schale 3 aufweist. Falls beide Spuren S1, S2 zurückgesetzt werden konnten, bleibt die Verteilereinheit 35 in ihrer aktuellen Position.

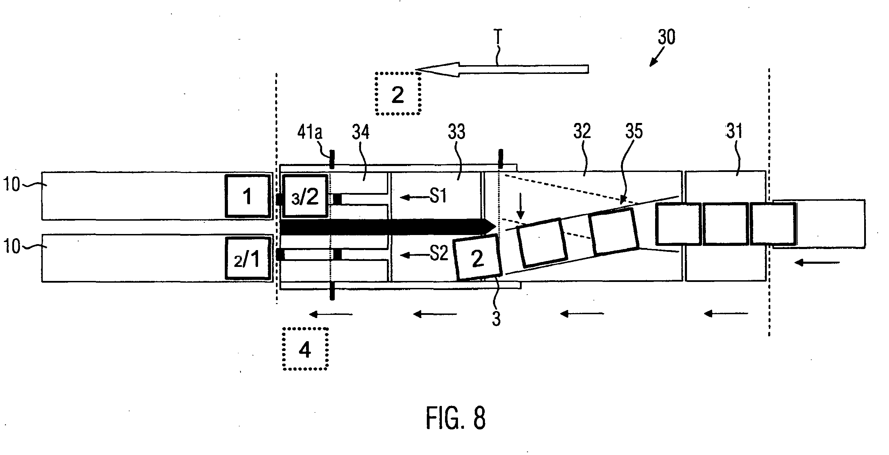

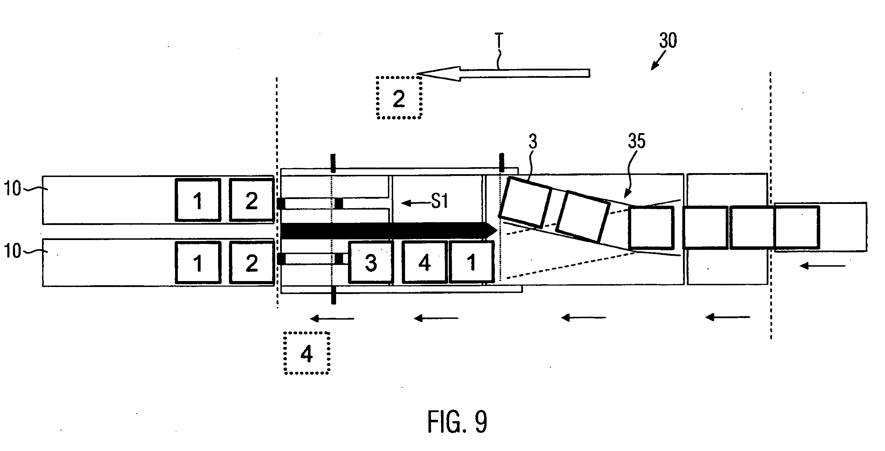

In Figur 8 ist der o.g. Fall gezeigt, dass auf der oberen Spur S1 noch eine Schale 3 vorhanden ist und nur die untere Spur S2 zurückgesetzt werden konnte. Nun werden neue Schalen 3 der Spur S2 zugeführt und solange gemeinsam mit Schalen 3 der Spur S1 an die Transportbänder 10 übergeben, bis mittels der Lichtschranke 41a die Steuerung 38 erkennt, dass auch die Spur S1 keine Schalen 3 mehr aufweist. Somit kann jetzt bei bereits laufendem Betrieb des Linienverteilers 30 und allen Transportbändern 31, 32, 33, 34 die Streckensteuerung auch für die Spur S1 zurückgesetzt werden. Der Linienverteiler 35 führt nun im Folgenden, siehe Figur 9, Schalen 3 der Spur 1 zu. Über Einstellungen in der Steuerung 38 kann der Modus bzw. die Logik für die Verteilereinheit 35 so verändert werden, dass die maximale Leistung für den laufenden Betrieb erreicht wird.

Die automatische Initialisierung funktioniert auch dann, wenn während des Stillstands (siehe Figur 5) Schalen nicht entfernt, sondern neue Schalen 3 zusätzlich auf das dritte Transportband 33 oder das vierte Transportband 34 aufgelegt wurden.

Der erfindungsgemäße Linienverteiler 30 ist nicht darauf beschränkt, von einem einspurigen Zuführsystem 2 auf ein zweispuriges System Schalen 3 oder Produkte zu verteilen. Es ist auch die Verteilung auf drei oder mehr Spuren denkbar. Analog sind pro zusätzlicher Spur je ein weiterer Freigabestopper, Vorstopper und eine Lichtschranke notwendig.

Ein wichtiger Vorteil der Erfindung besteht darin, dass nicht mehr - wie beim herkömmlichen Linienverteiler - ausschließlich vollständige Gruppen von Schalen in jeweils einer Spur an die nachfolgende Produktionseinheit übertragen werden. Stattdessen werden immer vollständige Reihen von Schalen parallel an die nachfolgende Produktionseinheit übergeben, was die Effizienz des Linienverteilers und damit der gesamten Verpackungsanlage erheblich steigert. Unter Berücksichtigung der in der Streckensteuerung vermerkten Informationen ist es möglich, die am Linienverteiler eintreffenden Schalen zeitoptimiert auf die verschiedenen Spuren zu verteilen. Insbesondere ist es möglich, dass die Verteilereinheit nicht nach jeder einzelnen Schale 3 die Spur wechselt, was eher ineffizient wäre, sondern dass in einem Arbeitsschritt zwei, drei oder allgemein mehrere Schalen, 3 an eine bestimmte Spur S1, S2 übergeben werden, bevor sich die Verteilereinheit 35 auf die andere Spur einstellt.

## Patentansprüche

1. Linienverteiler (30), zum Aufteilen eines einspurigen Stroms von Schalen (3) auf zwei Spuren (S1, S2), umfassend in einer Transportrichtung (T) aufeinander folgende erste bis vierte Transporteinheiten (31, 32, 33, 34) mit jeweils einem Antrieb, und umfassend einen Verteilersensor (37) und zwei Spursensoren (41a, 41b), eine Verteilereinheit (35), zwei Freigabestopper (40) und zwei Vorstopper (39a, 39b), wobei die Freigabestopper (40) dazu ausgebildet sind, eine erste Reihe (R) von Schalen (3) gleichzeitig zum Weitertransport an eine nachfolgende Produktionseinheit (11) freizugeben, und jeweils ein Spursensor (41a, 41b) zwischen dem Freigabestopper (40) und dem Vorstopper (39a, 39b) einer Spur (S1, S2) vorgesehen ist, um für jede Spur (S1, S2) die Anwesenheit einer Schale (3) zwischen dem Freigabestopper (40) und dem Vorstopper (39a, 39b) und/oder das hintere Ende einer Schale (3) zu erfassen, wobei ferner die vierte Transporteinheit (34) in ihrer Förderrichtung reversibel ist, um eine Schale (3), die an dem Freigabestopper (40) anstehen kann, von dem Spursensor (41 a, 41 b) zu erfassen, um das Vorhandensein einer Schale (3) zwischen dem Freigabestopper (40) und dem Vorstopper (39a, 39b) zu ermitteln.

2. Linienverteiler nach Anspruch 1, **dadurch gekennzeichnet, dass** die Spursensoren (41 a, 41 b) und/oder der Verteilersensor (37) optische Sensoren sind.

3. Linienverteiler nach einem der vorangehenden Ansprüche, **dadurch gekennzeichnet, dass** die Freigabestopper (40) einen gemeinsamen Aktor aufweisen.

4. Linienverteiler nach einem der vorangehenden Ansprüche, **dadurch gekennzeichnet, dass** der Linienverteiler (30) eine Streckensteuerung aufweist, die dazu ausgebildet ist, die aktuellen Positionen von den Schalen (3) entlang der Transportstrecke in einer Steuerung (38) zu verwalten.

5. Linienverteiler nach Anspruch 4, **dadurch gekennzeichnet, dass** die Steuerung (38) die Maschinensteuerung der Produktionseinheit (11) ist.

6. Linienverteiler nach einem der vorangehenden Ansprüche, **dadurch gekennzeichnet, dass** die Geschwindigkeit (v4) der vierten Transporteinheit (34) gegenüber der Geschwindigkeit (v3) einer direkt stromaufwärts angeordneten dritten Transporteinheit (33) höher ist, um einen Abstand (E) zwischen zwei aufeinanderfolgenden Schalen (3) zu erzeugen.

7. Linienverteiler nach einem der vorangehenden Ansprüche, **dadurch gekennzeichnet, dass** die Geschwindigkeit (v2) der zweiten Transporteinheit (32) gegenüber der Geschwindigkeit (v1) der direkt stromaufwärts angeordneten ersten Transporteinheit (31) höher ist, um einen Abstand (D) zwischen zwei aufeinanderfolgenden Schalen (3) zu erzeugen.

8. Linienverteiler nach einem der vorangehenden Ansprüche, **dadurch gekennzeichnet, dass** der Abstand (F) von dem Vorstopper (40) entgegen der Transportrichtung (T) bis zum Beginn der vierten Transporteinheit (34) der Länge (L) einer Schale (3) zuzüglich einer Toleranz von bis zu 20% entspricht.

9. Linienverteiler nach einem der vorangehenden Ansprüche, **dadurch gekennzeichnet, dass** zwischen den Vorstoppern (40) und dem Verteilersensor (37) die Anzahl einer Gruppe (G) von Schalen (3) einer Spur (S1, S2) eines Formates der nachfolgenden Produktionseinheit (11) auf jeder Spur (S1, S2) aufnehmbar ist.

10. Linienverteiler nach einem der vorangehenden Ansprüche, **dadurch gekennzeichnet, dass** die erste Transporteinheit (31) eine gegenüber der zweiten Transporteinheit (32) höhere Friktion an der mit einem Boden der Schalen (3) zusammenwirkenden Oberfläche aufweist.

11. Verfahren zum automatischen Initialisieren eines Linienverteilers (30) nach einem der vorangehenden Ansprüche, wobei eine Streckensteuerung vorgesehen ist, um die aktuellen Positionen von Schalen (3) entlang der Transportstrecke zwischen dem Verteilersensor (37) und dem Freigabestopper (40) zu verwalten, mit folgenden Schritten:
Ermitteln auf Vorhandensein einer Schale (3) auf jeder Spur (S1, S2) vor dem Freigabestopper (40) mittels des jeweiligen Spursensors (41a, 41b),
a) falls wenigstens auf einer Spur (S1, S2) keine Schale (3) ermittelt worden ist: Deaktivieren des Vorstoppers (39a, 39b) der Spur (S1, S2), die keine Schale (3) aufweist, und Bewegen der dritten und vierten Transporteinheit (33, 34), um Schalen (3) vor die Freigabestopper (40) zu transportieren,
b) falls auf beiden Spuren (S1, S2) eine Schale (3) ermittelt worden ist: Bewegen der dritten und vierten Transporteinheit (33, 34) und Deaktivieren der Freigabestopper (40) und der Vorstopper (39a, 39b), um die erste Reihe (R) von Schalen (3) an die Produktionseinheit (11) zu übergeben, danach Aktivieren der Freigabestopper (40), und
Zurückbewegen der vierten Transporteinheit (34), um eine Schale (3), die an dem Freigabestopper (40) anstehen kann, von dem Spursensor (41a, 41b) zu erfassen, um das Vorhandensein einer Schale (3) zwischen dem Freigabestopper (40) und dem Vorstopper (39a, 39b) zu ermitteln.

12. Verfahren nach Anspruch 11, **dadurch gekennzeichnet, dass** folgende Schritte vorgesehen sind:
Starten der dritten und vierten Transporteinheit (33, 34) und Freigeben von Reihen (R) von Schalen (3) vor den Freigabestoppern (40), bis bei einer oder beiden Spuren (S1, S2) keine Schale (3) mehr bis zum Freigabestopper (40) zugeführt werden kann,
Rücksetzen der Streckensteuerung für die leere Spur,
Linienverteiler (30) auf eine zurückgesetzte Spur (S1, S2) stellen.

13. Verfahren nach Anspruch 12, **dadurch gekennzeichnet, dass** bei dem Rücksetzen von nur einer Spur (S1, S2) die erste Transporteinheit (31) bewegt wird, um der rückgesetzten Spur (S1, S2) maximal die Anzahl von Schalen (3) für eine Spur (S1, S2) einer Gruppe (G) bereit zu stellen, bis bei der noch nicht rückgesetzten zweiten Spur (S1, S2) keine Schale (3) mehr zum Freigabestopper (40) zugeführt werden kann.

14. Verfahren nach Anspruch einem der vorangehenden Ansprüche 11 bis 13, **dadurch gekennzeichnet, dass** entsprechend der Belegung der Spuren (S1, S2), die über die Streckensteuerung ermittelt wird, die Schalen (3) mittels einer Verteilereinheit (35) auf beide Spuren (S1, S2) verteilt werden.

## Claims

1. Conveyor lane divider (30), for dividing a one-lane flow of trays (3) into two lanes (S1, S2), comprising first through fourth conveyor units (31, 32, 33, 34) in succession in a direction of transport (T), each of which has a drive, and comprising a divider sensor (37) and two lane sensors (41 a, 41 b), a divider unit (35), two release stops (40) and two pre-stops (39a, 39b), wherein the release stops (40) are designed to simultaneously release a first row (R) of trays (3) for further transport to a subsequent production unit (11), and a lane sensor (41 a, 41 b) is provided between the release stop (40) and the pre-stop (39a, 39b) of each lane (S1, S2) in order to detect the presence of a tray (3) between the release stop (40) and the pre-stop (39a, 39b) and/or the back end of a tray (3) for every lane (S1, S2),
wherein further the fourth conveyor unit (34) is reversible in its direction of travel in order to detect a tray (3), which may wait in front of the release stop (40), by means of the lane sensor (41 a, 41 b) so as to ascertain the presence of a tray (3) between the release stop (40) and the pre-stop (39a, 39b).

2. Conveyor lane divider according to claim 1, **characterized in that** the lane sensors (41 a, 41 b) and/or the divider sensor (37) are optical sensors.

3. Conveyor lane divider according to one of the preceding claims, **characterized in that** the release stops (40) have a common actuator.

4. Conveyor lane divider according to one of the preceding claims, **characterized in that** the conveyor lane divider (30) has a line motion control system that is designed to manage the current positions of the trays (3) along the transport path by a controller (38).

5. Conveyor lane divider according to claim 4, **characterized in that** the controller (38) is the machine control system of the production unit (11).

6. Conveyor lane divider according to one of the preceding claims, **characterized in that** the speed (v4) of the fourth conveyor unit (34) is higher than the speed (v3) of a third conveyor unit (33) located directly upstream in order to produce a distance (E) between two successive trays (3).

7. Conveyor lane divider according to one of the preceding claims, **characterized in that** the speed (v2) of the second conveyor unit (32) is higher than the speed (v1) of the first conveyor unit (31) located directly upstream in order to produce a distance (D) between two successive trays (3).

8. Conveyor lane divider according to one of the preceding claims, **characterized in that** the distance (F) from the pre-stop (40) opposite the direction of transport (T) to the beginning of the fourth conveyor unit (34) corresponds to the length (L) of a tray (3) plus a tolerance of up to 20%.

9. Conveyor lane divider according to one of the preceding claims, **characterized in that** the number of a group (G) of trays (3) of one lane (S1, S2) of a format of the subsequent production unit (11) can be accommodated between the pre-stops (40) and the divider sensor (37) in each lane (S1, S2).

10. Conveyor lane divider according to one of the preceding claims, **characterized in that** the first conveyor unit (31) has a higher friction on the surface interacting with a bottom of the trays (3) than the second conveyor unit (32).

11. Method for automatically initializing a conveyor lane divider (30) according to one of the preceding claims, wherein a line motion control system is provided in order to manage the current positions of trays (3) along the transport path between the divider sensor (37) and the release stop (40), having the following steps:
Ascertaining the presence of a tray (3) in each lane (S1, S2) ahead of the release stop (40) by means of the applicable lane sensor (41a, 41b),
a) if no tray (3) has been detected in at least one lane (S1, S2): Deactivating the pre-stop (39a, 39b) of the lane (S1, S2) that does not have a tray (3), and moving the third and fourth conveyor units (33, 34) to convey trays (3) ahead of the release stops (40),
b) if a tray (3) has been detected in both lanes (S1, S2): Moving the third and fourth conveyor units (33, 34) and deactivating the release stops (40) and the pre-stops (39a, 39b) in order to transfer the first row (R) of trays (3) to the production unit (11), then activating the release stops (40),
and moving the fourth conveyor unit (34) backward in order to have the lane sensor (41 a, 41 b) sense a tray (3) that may be present at the release stop (40) so as to ascertain the presence of a tray (3) between the release stop (40) and the pre-stop (39a, 39b).

12. Method according to claim 11, **characterized in that** the following steps are provided:
Starting the third and fourth conveyor units (32, 33, 34) and releasing rows (R) of trays (3) ahead of the release stops (40) until no more trays (3) can be advanced to the release stop (40) in one or both lanes (S1, S2),
Resetting the line motion control system for the empty lane,
Setting the conveyor lane divider (30) to a lane (S1, S2) that has been reset.

13. Method according to claim 12, **characterized in that**, when just one lane (S1, S2) is reset, the first conveyor unit (31) is moved in order to provide the lane (S1, S2) that has been reset with the maximum number of trays (3) for a lane (S1, S2) of a group (G) until no more trays (3) can be supplied to the release stop (40) in the second lane (S1, S2) that has not as yet been reset.

14. Method according to one of the preceding claims 11 through 13, **characterized in that**, in accordance with the population of the lanes (S1, S2), which is determined by the line motion control system, the trays (3) are distributed to both lanes (S1, S2) by means of a divider unit (35), preferably at least two trays (3) per lane (S1, S2) in alternation and less than the designated number per lane (S1, S2) of a group (G).

## Revendications

1. Distributeur de répartition en lignes (30), destiné à répartir un flux de barquettes (3) d'une seule piste sur deux pistes (S1, S2), comprenant des première à quatrième unités de transport (31, 32, 33, 34), qui se succèdent dans une direction de transport (T) et comportent chacune un entraînement, et comprenant un détecteur de répartition (37) et deux détecteurs de piste (41a, 41b), une unité de répartition (35), deux taquets d'arrêt d'évacuation (40) et deux taquets d'arrêt primaires (39a, 39b), distributeur de répartition
dans lequel les taquets d'arrêt d'évacuation (40) sont conçus pour évacuer simultanément les barquettes (3) d'une première rangée (R) pour poursuivre leur transport vers une unité de production (11) qui suit, et un détecteur de piste (41a, 41b) est prévu respectivement entre le taquet d'arrêt d'évacuation (40) et le taquet d'arrêt primaire (39a, 39b) d'une piste (S1, S2), en vue de détecter, pour chaque piste (S1, S2), la présence d'une barquette (3) entre le taquet d'arrêt d'évacuation (40) et le taquet d'arrêt primaire (39a, 39b), et/ou l'extrémité arrière d'une barquette (3),
dans lequel la quatrième unité de transport (34) est par ailleurs réversible quant à son sens de transport, pour détecter, avec le détecteur de piste (41a, 41b), une barquette (3), qui peut être arrêtée au niveau du taquet d'arrêt d'évacuation (40), en vue de déterminer la présence d'une barquette (3) entre le taquet d'arrêt d'évacuation (40) et le taquet d'arrêt primaire (39a, 39b).

2. Distributeur de répartition en lignes selon la revendication 1, **caractérisé en ce que** les détecteurs de piste (41a, 41b) et/ou le détecteur de répartition (37) sont des détecteurs optiques.

3. Distributeur de répartition en lignes selon l'une des revendications précédentes, **caractérisé en ce que** les taquets d'arrêt d'évacuation (40) présentent un actionneur commun.

4. Distributeur de répartition en lignes selon l'une des revendications précédentes, **caractérisé en ce que** le distributeur de répartition en lignes (30) présente une commande de déplacement linéaire, qui est conçue pour gérer les positions instantanées des barquettes (3) le long du parcours de transport, dans un dispositif de commande (38).

5. Distributeur de répartition en lignes selon la revendication 4, **caractérisé en ce que** le dispositif de commande (38) est constitué par la commande de machine de l'unité de production (11).

6. Distributeur de répartition en lignes selon l'une des revendications précédentes, **caractérisé en ce que** la vitesse (v4) de la quatrième unité de transport (34) est plus élevée par rapport à la vitesse (v3) d'une troisième unité de transport (33) agencée directement en amont, en vue de produire une distance d'espacement (E) entre deux barquettes (3) successives.

7. Distributeur de répartition en lignes selon l'une des revendications précédentes, **caractérisé en ce que** la vitesse (v2) de la deuxième unité de transport (32) est plus élevée par rapport à la vitesse (v1) de la première unité de transport (31) agencée directement en amont, en vue de produire une distance d'espacement (D) entre deux barquettes (3) successives.

8. Distributeur de répartition en lignes selon l'une des revendications précédentes, **caractérisé en ce que** la distance (F) à partir du taquet d'arrêt primaire (40), à l'encontre de la direction de transport (T), jusqu'au début de la quatrième unité de transport (34), correspond à la longueur (L) d'une barquette (3) plus une tolérance pouvant aller jusqu'à 20%.

9. Distributeur de répartition en lignes selon l'une des revendications précédentes, **caractérisé en ce qu'**entre les taquets d'arrêt primaires (40) et le détecteur de répartition (37), il est possible d'accueillir sur chaque piste (S1, S2), un groupe (G) de barquettes (3) d'une piste (S1, S2) d'un nombre correspondant au format de l'unité de production (11), qui suit.

10. Distributeur de répartition en lignes selon l'une des revendications précédentes, **caractérisé en ce que** la première unité de transport (31) présente, au niveau de la surface coopérant avec un fond des barquettes (3), une friction plus élevée par rapport à la deuxième unité de transport (32).

11. Procédé pour initialiser automatiquement un distributeur de répartition en lignes (30) selon l'une des revendications précédentes, dans lequel est prévu une commande de déplacement linéaire, pour gérer les positions instantanées de barquettes (3) le long du parcours de transport entre le détecteur de répartition (37) et le taquet d'arrêt d'évacuation (40), le procédé présentant les étapes suivantes :
détermination de la présence d'une barquette (3) sur chaque piste (S1, S2) devant le taquet d'arrêt d'évacuation (40), au moyen du détecteur de piste (41a, 41b) respectif,
a) dans le cas où sur au moins l'une des pistes (S1, S2) aucune barquette (3) n'a été détectée : rendre inactif le taquet d'arrêt primaire (39a, 39b) de la piste (S1, S2), qui ne présente pas de barquette (3), et mettre en mouvement la troisième et la quatrième unité de transport (33, 34) pour transporter des barquettes (3) devant les taquets d'arrêt d'évacuation (40),
b) dans le cas où sur les deux pistes (S1, S2) une barquette (3) a été détectée : mettre en mouvement la troisième et la quatrième unité de transport (33, 34), et rendre inactifs les taquets d'arrêt d'évacuation (40) et les taquets d'arrêt primaires (39a, 39b), pour transférer la première rangée (R) de barquettes (3) à l'unité de production (11), et ensuite rendre actifs les taquets d'arrêt d'évacuation (40), et
mise en mouvement de la quatrième unité de transport (34) dans le sens opposé du retour, pour pouvoir détecter au moyen du détecteur de piste (41a, 41b), une barquette (3) qui peut être arrêtée contre le taquet d'arrêt d'évacuation (40), en vue de déterminer la présence d'une barquette (3) entre le taquet d'arrêt d'évacuation (40) et le taquet d'arrêt primaire (39a, 39b).

12. Procédé selon la revendication 11, **caractérisé en ce que** sont prévues les étapes suivantes :
démarrage de la troisième et de la quatrième unité de transport (33, 34) et évacuation de rangées (R) de barquettes (3) devant les taquets d'arrêt d'évacuation (40), jusqu'à ce que sur l'une ou les deux pistes (S1, S2) aucune barquette (3) ne puisse plus être amenée jusqu'au taquet d'arrêt d'évacuation (40),
remise à l'état initial de la commande de déplacement linéaire pour la piste vide,
réglage du distributeur de répartition en lignes (30) sur une piste (S1, S2) remise à l'état initial.

13. Procédé selon la revendication 12, **caractérisé en ce que** dans le cas de la remise à l'état initial de seulement une piste (S1, S2), on met en mouvement la première unité de transport (31) pour fournir à la piste (S1, S2) remise à l'état initial, au maximum le nombre de barquettes (3), pour une piste (S1, S2), d'un groupe (G), jusqu'à ce que sur la deuxième piste (S1, S2) non encore remise à l'état initial, aucune barquette (3) ne puisse plus être amenée au taquet d'arrêt d'évacuation (40).

14. Procédé selon l'une des revendications précédentes 11 à 13, **caractérisé en ce que** suivant l'occupation des pistes (S1, S2), qui est déterminée par l'intermédiaire de la commande de déplacement linéaire, les barquettes (3) sont réparties, au moyen d'une unité de répartition (35), sur les deux pistes (S1, S2).
